# EUROPÄISCHE PATENTSCHRIFT

(11) **EP 1 984 453 B1**
(45) Veröffentlichungstag und Bekanntmachung des Hinweises auf die Patenterteilung: **02.06.2010**
(21) Anmeldenummer: 07704375.0
(22) Anmeldetag: 06.02.2007
(51) Int. Cl.: C08L 97/02

(54) **VERFAHREN ZUR HERSTELLUNG VON FORMKÖRPERN AUS EINEM GEMISCH VON PARTIKULÄREN NATURMATERIALIEN UND THERMOPLASTISCHEM BINDEMITTEL**
PROCESS FOR PRODUCING SHAPED BODIES FROM A MIXTURE OF PARTICULATE NATURAL MATERIALS AND THERMOPLASTIC BINDER
PROCEDE DE FABRICATION DE CORPS MOULES A PARTIR D'UN MELANGE DE MATERIAUX NATURELS PARTICULAIRES ET D'UN LIANT THERMOPLASTIQUE

(30) Priorität: 13.02.2006 DE 102006006580
(43) Veröffentlichungstag der Anmeldung: 29.10.2008
(73) Patentinhaber: Wacker Chemie AG, 81737 München (DE)
(72) Erfinder: PFAADT, Marcus, 84489 Burghausen (DE); FUNKE, Thomas, E-08190 Sant Cugat Del Vallés (ES)
(74) Vertreter: Schuderer, Michael
(86) Internationale Anmeldenummer: PCT/EP2007/051092
(87) Internationale Veröffentlichungsnummer: WO 2007/093518

(56) Entgegenhaltungen:
- WO-A-2004/085533
- DE-A1- 3 025 522
- DE-A1- 19 729 161
- DE-A1- 19 949 593

## Beschreibung

Die Erfindung betrifft ein Verfahren zur Herstellung von Formkörpern aus einem Gemisch von partikulären Naturmaterialien und thermoplastischem Bindemittel, wobei das Gemisch unter Temperatur- und/oder Druckerhöhung zu einem Formkörper ausgeformt wird.

Naturfaserstoffe, insbesondere Holzfasern werden in letzter Zeit vermehrt in Verbindung mit Thermoplasten zur Herstellung von Wood Plastic Composites verarbeitet. Dazu werden die Holz- fasern oder Holzmehl mit einem thermoplastischen Bindemittel vermischt und mittels Extrusion zu Formkörpern verarbeitet. Aus der WO-A 96/34045 ist ein Verfahren zur Herstellung von Formkörpern bekannt, bei dem natürliche Fasermaterialien im Gemisch mit thermoplastischen Kunststoffen verarbeitet werden. Die Herstellung von Kunststoff-Formmassen durch Extrusion eines Gemisches aus Naturfaser und Thermoplast ist auch in der WO-A 03/008494 bekannt. Dabei wird der Naturfaseranteil in Form von mit Thermoplast gebundenen Pellets eingebracht.

Diese Naturstoffe, welche beispielsweise in Form von Holzfasern, Holzmehl oder Holzschnitzeln vorliegen, enthalten im lufttrockenen Zustand eine erhebliche Menge an Restfeuchte. Thermoplaste, wie Polyolefine, Polyvinylchlorid oder ABS, sind nicht in der Lage, das bei der Verarbeitung freigesetzte Wasser in einer für den Prozess signifikanten Menge aufzunehmen. Bei der thermoplastischen Verarbeitung, beispielsweise mittels Extrusion, von Gemischen solcher Naturstoffe und Thermoplasten führt das vorhandene Restwasser daher zu einer unkontrollierten Blasenbildung in den Formkörpern, aufgrund der bei den Verarbeitungstemperaturen auftretenden blitzartigen Verdampfung. Dies kann soweit führen, dass der Zusammenhalt eines solchen Formkörpers nicht mehr gewährleistet ist.

In der WO-A 03/035373 und der WO-A 2004/090022 wird daher vorgeschlagen, bei der Herstellung von Formkörpern aus Naturfaser und Thermoplast zusätzlich noch ein wasserbindendes Biopolymer, Stärke oder Protein, einzusetzen. Nachteilig ist dabei, dass das Gemisch zusätzlich zur Naturfaser und dem thermoplastischen Binder noch eine dritte Komponente umfasst und die Festgkeit des Formkörpers reduziert wird.

Es bestand daher die Aufgabe, ein Verfahren zur Herstellung von Formkörpern aus Naturfasermaterial und thermoplastischem Bindemittel zur Verfügung zu stellen, welches zu Formkörpern mit hoher mechanischer Festigkeit führt, und bei dem zur Entfernung des Restwassers keine zusätzlichen Verfahrensschritte oder zur Bindung von Restwasser keine Zusatzstoffe erforderlich sind.

Gegenstand der Erfindung ist ein Verfahren zur Herstellung von Formkörpern aus einem Gemisch von partikulären Naturmaterialien und thermoplastischem Bindemittel ohne Stärkezusatz, wobei das Gemisch unter Temperatur- und/oder Druckerhöhung zu einem Formkörper ausgeformt wird, dadurch gekennzeichnet, dass das thermoplastische Bindemittel in Form einer in Wasser redispergierbaren Polymerpulver-Zusammensetzung eingesetzt wird, enthaltend
ein oder mehrere Polymerisate auf der Basis von einem oder mehreren Monomeren aus der Gruppe umfassend Vinylester, (Meth)acrylsäureester von unverzweigten oder verzweigten Alkoholen mit 1 bis 15 C-Atomen, Vinylaromaten, Olefine, 1,3-Diene und Vinylhalogenide und gegebenenfalls 0.1 bis 5 Gew.-%, bezogen auf das Gesamtgewicht des Monomergemisches, Hilfsmonomere, ein oder mehrere Schutzkolloide aus der Gruppe umfassend teilverseifte oder vollverseifte Polyvinylalkohole, Polyvinylpyrrolidone, Polyvinylacetale, Cellulosen und deren Derivate, Proteine, Ligninsulfonate, Poly(meth)acrylamid, Polyvinylsulfonsäuren und deren wasserlöslichen Copolymere, Melaminformaldehydsulfonate, Naphthalinformaldehydsulfonate, sowie 1 bis 30 Gew.-% Antiblockmittel, bezogen auf den Polymeranteil.

Geeignete partikuläre Naturmaterialien sind beispielsweise Holzfasern, Holzmehl und Holzschnitzel. Bevorzugt werden pflanzliche Naturmaterialien wie Baumwoll-Fasern, Jute-Fasern, Sisal-Fasern, Hanf-Fasern, Flachs-Fasern und Holz-Fasern und Holzmehl. Der Anteil der Naturmaterialien in dem thermoplastisch zu verarbeitenden Gemisch beträgt 20 bis 98 Gew.-%, vorzugsweise 50 bis 80 Gew.-%, jeweils bezogen auf das Gesamtgewicht des Gemisches.

Als in Wasser redispergierbare Polymerpulver bezeichnet man Pulverzusammensetzungen, welche mittels Trocknung der entsprechenden wässrigen Dispersionen der Basispolymerisate in Gegenwart von Schutzkolloiden zugänglich werden. Aufgrund dieses Herstellungsprozesses wird das feinteilige Harz der Dispersion mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren in Wasser löst sich das Schutzkolloid wieder in Wasser und es liegt eine wässrige Dispersion der ursprünglichen Polymerteilchen vor (Schulze J. in TIZ, No. 9, 1985).

Geeignete Polymerisate sind solche auf der Basis von einem oder mehreren Monomeren aus der Gruppe umfassend Vinylester, (Meth)acrylsäureester von unterzweigten oder verzweigten Alkoholen mit 1 bis 15 C-Atomen, Vinylaromaten, Olefine, 1,3-Diene und Vinylhalogenide und gegebenenfalls 0.1 bis 5 Gew.-%, bezogen auf das Gesamtgewicht des Monomergemisches, Hilfsmonomere.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von ≤ 120°.C, vorzugsweise -40°C bis +120°C, besonders bevorzugt -20°C bis +80°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New Y-ork (1975) aufgeführt.

Bevorzugt werden Homo- oder Mischpolymerisate, welche ein oder mehrere Monomere aus der Gruppe Vinylacetat, Vinylester von αverzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Besonders bevorzugt werden Mischpolymerisate mit Vinylacetat und Ethylen; mit Vinylacetat, Ethylen und einem Vinylester von α-verzweigten Monocarbonsäuren mit 9 bis 11 C-Atomen; mit n-Butylacrylat und 2-Ethylhexylacrylat und/oder Methylmethacrylat; mit Styrol und einem oder mehreren Monomeren aus der Gruppe Methylacrylat, Ethylacrylat, Propylacrylat, n-Butylacrylat, 2-Ethylhexylacrylat; mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Die Herstellung der Polymerisate erfolgt nach dem Emulsionspolymerisationsverfahren oder nach dem Suspensionspolymerisationsverfahren in Gegenwart von Schutzkolloiden, vorzugsweise nach dem Emulsionspolymerisationsverfahren, wobei die Polymerisationstemperatur im allgemeinen 20°C bis 100°C, vorzugsweise 60°C bis 90°C beträgt, und bei der Copolymerisation von gasförmigen Comonomeren wie Ethylen auch unter Druck, im allgemeinen zwischen 5 bar und 100 bar, gearbeitet werden kann. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind Natriumpersulfat, Wasserstoffperoxid, A-zobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind beispielsweise Natriumsulfit, Natriumhydroxymethansulfinat und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Zur Stabilisierung des Polymerisationsansatzes werden Schutzkolloide, gegebenenfalls in Kombination mit Emulgatoren, eingesetzt. Geeignete Schutzkolloide sind teilverseifte oder vollverseifte Polyvinylalkohole; Polyvinylpyrrolidone; Polyvinylacetale; Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; Poly(meth)acrylamid, Polyvinylsulfonsäuren und deren wasserlöslichen Copolymere; Melaminformaldehydsulfonate, Naphthalinformaldehydsulfonate, Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver-Zusammensetzungen werden die Dispersionen, gegebenenfalls nach Zusatz von weiteren Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

In der Regel wird die Trocknungshilfe in einer Gesamtmenge von 0.5 bis 30 Gew.-%, bezogen auf die polymeren Bestandteile der Dispersion, eingesetzt. Das heißt die Gesamtmenge an Schutzkolloid vor dem Trocknungsvorgang soll mindestens 1 bis 30 Gew.-%, bezogen auf den Polymeranteil betragen; bevorzugt werden 5 bis 20 Gew.-% bezogen auf den Polymeranteil eingesetzt.

Geeignete Trocknungshilfen sind beispielsweise die bereits genannten Schutzkolloide.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, ist das erhaltene Pulver mit einem Antiblockmittel (Antibackmittel), 1 bis 30 Gew.-%, bezogen auf das Gesamtgewicht polymerer Bestandteile, ausgerüstet. Beispiele für Antiblockmittel sind Ca- bzw. Mg-Carbonat, Talk, Gips, Kieselsäure, Kaoline wie Metakaolin, Silicate mit Teilchengrößen vorzugsweise im Bereich von 10 nm bis 10 µm.

Am meisten bevorzugt werden Redispersionspulver-Zusammensetzungen enthaltend Mischpolymerisate mit Vinylacetat und Ethylen oder Mischpolymerisate mit Vinylacetat, Ethylen und einem Vinylester von α-verzweigten Monocarbonsäuren mit 9 bis 11 C-Atomen als filmbildendem Polymerisat und teilverseiften Polyvinylalkohol als Schutzkolloid.

Der Anteil der in Wasser redispergierbaren Polymerpulver-Zusammensetzungen in dem thermoplastisch zu verarbeitenden Gemisch beträgt 1 bis 80 Gew.-%, vorzugsweise 5 bis 50 Gew.-%, besonders bevorzugt 10 bis 40 Gew.-%, jeweils bezogen auf das Gesamtgewicht des Gemisches. Die redispergierbaren Polymerpulver-Zusammensetzungen können auch im Gemisch mit herkömmlichen, nicht redispergierbaren Thermoplasten eingesetzt werden. Beispiele für herkömmliche Thermoplaste sind Polyethylen, Polypropylen, PVC, ABS, Polyvinylacetat-Festharz. Der Gewichtsanteil dieser Thermoplasten sollte im Gemisch mit dem redispergierbaren Polymerpulver vorzugsweise 70 Gew.-% nicht überschreiten. Gegebenenfalls kann das redispergierbare Polymerpulver auch im Gemisch mit Vernetzern eingesetzt werden. Beispiele hierfür sind Epoxidvernetzer wie Epicote.

Gegebenenfalls können in dem Gemisch noch weitere, bei der thermoplastischen Verarbeitung von Kunststoffen übliche, Zusatzstoffe enthalten sein. Beispiele hierfür sind Farbstoffe, Pigmente, Stabilisatoren, Weichmacher, Gleitmittel und Flammschutzmittel.

Zur Herstellung der Formkörper werden die partikulären Naturmaterialien und die in Wasser redispergierbare Polymerpulver-Zusammensetzung, sowie gegebenenfalls weitere Zusatzstoffe, beispielsweise in einem Heißmischer, miteinander vermischt, und mittels der üblichen thermoplastischen Umformungstechniken zu Formkörpern verarbeitet. Vorzugsweise erfolgt die Verarbeitung mittels Extrusion mit entsprechender Entgasungszone und Spritzgiessen. Die Verarbeitungstemperatur beträgt im allgemeinen 60°C bis 200°C, vorzugsweise 90°C bis 150°C. Vorzugsweise wird bei erhöhtem Druck gearbeitet, vorzugsweise bei Drucken von 10 bis 600 bar abs. Die Herstellung der Formkörper kann auch über die Granultstüfe erfolgen.

Überraschenderweise hat sich gezeigt, dass bei der Verwendung von in Wasser redispergierbaren Polymerpulver-Zusammensetzung bei der thermoplastischen Verarbeitung keine Vortrocknung von luftgetrocknetem Holz mit circa 8 Gew.% Wassergehalt und keine Zugabe von wasserbindenden Zusatzstoffen erforderlich ist. Die Herstellung von Formkörper wird mit dem erfindungsgemäßen Verfahren daher erheblich erleichtert.

Die nachfolgenden Beispiele dienen der weiteren Erläuterung der Erfindung:

Zur Testung wurden folgende Bestandteile eingesetzt:
RD-Pulver 1 (RDP 1):
   Mit Polyvinylalkohol stabilisiertes Dispersionspulver auf Basis eines Polyvinylacetat-Homopolymers mit Tg = 30°C (Vinnex LL 2510 der Wacker Chemie AG).
RD-Pulver 2 (RDP 2):
   Mit Polyvinylalkohol stabilisiertes Dispersionspulver auf Basis eines Ethylen-Vinylacetat-Copolymers mit Tg = -7°C (Vinnex LL 2504 der Wacker Chemie AG).
Vergleichsthermoplast (VT):
   Polyvinylacetat-Festharz mit Tg = 30°C (Vinnapas UW 1 der Wacker Chemie AG).
Holzfaser (luftgetrocknet):
   Lignocel BK 40/90 der Firma Rettenmaier
Stärke:
   Emsize E9 der Firma Emsland Stärke
Pigment:
   Titandioxid Kronos 2000 der Firma Kronos.
Gleitmittel:
   Calciumstearat Caesit 1 der Firma Bärlocher.

Es wurden Hart-Profile (Tabelle 1) und Weich-Profile (Tabelle 2) mittels Extrusion hergestellt.
Dazu wurden die in den Tabellen angegebenen Gemische in den dort angegebenen Mengen (Gew.-Teile) mit einem Zweischneckenextruder mit gegensinnig laufenden Schnecken zu Profilen verarbeitet. Die Verarbeitungstemperatur hat 100°C bis 130°C betragen.

Die Gemische wurden auch auf einer Spritzgussanlage verarbeitet.
Die Extrudierbarkeit, die Spritzgießfähigkeit sowie die Blasenbildung während der Extrusion wurden visuell beurteilt.

Die mechanischen Eigenschaften wie Elastizitätsmodul (E-Modul) und Biegefestigkeit (BF) wurden an Pressplatten mit 80 mm x 10 mm x 4 mm gemäß DIN EN ISO 178 ermittelt.

Die Ergebnisse sind in den Tabellen 1 und 2 zusammengefasst:

**Tabelle 1:**

| Hart-Profil | Vbsp.1 | Bsp. 2 | Vbsp. 3 | Vbsp. 4 |
|---|---|---|---|---|
| | | | | |
| RDP 1 [Gew.-T] | 25 | 25 | | |
| VT PVAC [Gew.-T] | | | 25 | 25 |
| Ho1zfaser[Gew.-T] | 55 | 75 | 55 | 75 |
| Stärke [Gew.-T] | 20 | | 20 | |
| Additive [Gew.-T] | 4 | 4 | 4 | 4 |
| | | | | |
| E-Modul [N/mm²] | 5170 | 6160 | 6000 | 6450 |
| BF [N/mm²] | 63 | 65 | 65 | 65 |
| Extrudierbarkeit Spritzgießfähigk. | Sehr gut | Sehr gut | Gut | schlecht |
| Blasenbildung | Nein | Nein | Nein | ja |

Die Ergebnisse zeigen, dass beim Einsatz von redispergierbaren Thermoplasten als Bindemittel, im Vergleich zu herkömmlichem Thermoplast, die Extrudierbarkeit und Spritzgußfähigkeit sowie die Endprodukteigenschaften deutlich verbessert werden. Dies wird vor allem bei den Formulierungen ohne Stärkezusatz deutlich: Ein nicht redispergierbares PVAC-Festharz kann das während der Verarbeitung aus dem Holz freigesetzte Wasser nicht aufnehmen, was vermehrte Blasenbildung und eingeschränkten Zusammenhalt der Profilgeometrie zur Folge hat.

**Tabelle 2:**

| Weich-Profil | Vbsp.5 | Bsp. 6 |
|---|---|---|
| | | |
| RDP 2 [Gew.-T] | 25 | 25 |
| Holzfaser[Gew.-T] | 55 | 75 |
| Stärke [Gew.-T] | 20 | |
| Additive [Gew.-T] | 4 | 4 |
| | | |
| E-Modul [N/mm²] | 2000 | 2217 |
| BF [N/mm²] | 1,9 | 1,9 |
| Extrudierbarkeit Spritzgießfähigk. | Sehr gut | Sehr gut |
| Blasenbildung | Nein | Nein |

Die Ergebnisse mit einem weichen, flexiblen Bindepulver mit einer Shore-Härte A90 zeigen, dass auch ohne den Einsatz von wasserbindender Stärke sehr gute Verarbeitbarkeit und sehr gute mechanische Eigenschaften resultieren.

## Patentansprüche

1. Verfahren zur Herstellung von Formkörpern aus einem Gemisch von partikulären Naturmaterialien und thermoplastischem Bindemittel ohne Stärkezusatz, wobei das Gemisch unter Temperatur- und/oder Druckerhöhung zu einem Formkörper ausgeformt wird, **dadurch gekennzeichnet, dass** das thermoplastische Bindemittel in Form einer in Wasser redispergierbaren Polymerpulver-Zusammensetzung eingesetzt wird, enthaltend
ein oder mehrere.Polymerisate auf der Basis von einem oder mehreren Monomeren aus der Gruppe umfassend Vinylester, (Meth)acrylsäureester von unverzweigten oder verzweigten Alkoholen mit 1 bis 15 C-Atomen, Vinylaromaten, Olefine, 1,3-Diene und Vinylhalogenide und gegebenenfalls 0.1 bis 5 Gew.-%, bezogen auf das Gesamtgewicht des Monomergemisches, Hilfsmonomere,
ein oder mehrere Schutzkolloide aus der Gruppe umfassend teilverseifte oder vollverseifte Polyvinylalkohole, Polyvinylpyrrolidone, Polyvinylacetale, Cellulosen und deren Derivate, Proteine, Ligninsulfonate, Poly(meth)acrylamid, Polyvinylsulfonsäuren und deren wasserlöslichen Copolymere, Melaminformaldehydsulfonate, Naphthalinformaldehydsulfonate,
sowie 1 bis 30 Gew.-% Antiblockmittel, bezogen auf den Polymeranteil.

2. Verfahren nach Anspruch 1, **dadurch gekennzeichnet, dass** ein Polymerisat enthalten ist, aus der Gruppe umfassend Vinylacetat-Homopolymerisat, Mischpolymerisate mit Vinylacetat und Ethylen, Mischpolymerisate mit Vinylacetat, Ethylen und einem Vinylester von α-verzweigten Monocarbonsäuren mit 9 bis 11 C-Atomen, Mischpolymerisate mit n-Butylacrylat und 2-Ethylhexylacrylat und/oder Methylmethacrylat, Mischpolymerisate mit Styrol und einem oder mehreren Monomeren aus der Gruppe Methylacrylat, Ethylacrylat, Propylacrylat, n-Butylacrylat, 2-Ethylhexylacrylat, Mischpolymerisate mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen, Mischpolymerisate mit 1,3-Butadien und Styrol und/oder Methylmethacrylat sowie gegebenenfalls weiteren Acrylsäureestern.

3. Verfahren nach Anspruch 1 bis 2, **dadurch gekennzeichnet, dass** als partikuläre Naturmaterialien Naturfasern eingesetzt werden.

4. Verfahren nach Anspruch 1 bis 3, **dadurch gekennzeichnet, dass** als partikuläre Naturmaterialien Holzfasern, Holzmehl oder Holzschnitzel eingesetzt werden.

5. Verfahren nach Anspruch 1 bis 4, **dadurch gekennzeichnet, dass** die in Wasser redispergierbare Polymerpulver-Zusammensetzung im Gemisch mit nicht in Wasser redispergierbaren Thermoplasten eingesetzt wird.

6. Verfahren nach Anspruch 1 bis 5, **dadurch gekennzeichnet, dass** die in Wasser redispergierbare Polymerpulver-Zusammensetzung im Gemisch mit Vernetzer eingesetzt wird.

## Claims

1. Process for the production of mouldings from a mixture of particulate natural materials and thermoplastic binder without added starch, the mixture being shaped into a moulding with temperature and/or pressure increase, **characterized in that** the thermoplastic binder is used in the form of a polymer powder composition redispersible in water, containing
one or more polymers based on one or more monomers from the group consisting of vinyl esters, (meth)acrylates of straight-chain or branched alcohols having 1 to 15 C atoms, vinylaromatics, olefins, 1,3-dienes and vinyl halides and optionally 0.1 to 5% by weight, based on the total weight of monomer mixture, of auxiliary monomers,
one or more protective colloids from the group consisting of partly hydrolysed or completely hydrolysed polyvinyl alcohols, polyvinylpyrrolidones, polyvinyl acetals, celluloses and derivatives thereof, proteins, lignin sulphonates, poly(meth)acrylamide, polyvinylsulphonic acids and the water-soluble copolymers thereof, melamine formaldehyde sulphonates and naphthalene formaldehyde sulphonates,
and 1 to 30% by weight of antiblocking agent, based on the proportion of polymer.

2. Process according to Claim 1, **characterized in that** a polymer from the group consisting of vinyl acetate homopolymer, copolymers with vinyl acetate and ethylene, copolymers with vinyl acetate, ethylene and a vinyl ester of α-branched monocarboxylic acids having 9 to 11 C atoms, copolymers with n-butyl acrylate and 2-ethylhexyl acrylate and/or methyl methacrylate, copolymers with styrene and one or more monomers from the group consisting of methyl acrylate, ethyl acrylate, propyl acrylate, n-butyl acrylate, 2-ethylhexyl acrylate, copolymers with vinyl acetate and one or more monomers from the group consisting of methyl acrylate, ethyl acrylate, propyl acrylate, n-butyl acrylate, 2-ethylhexyl acrylate and optionally ethylene, copolymers with 1,3-butadiene and styrene and/or methyl methacrylate and optionally further acrylates is present.

3. Process according to either of Claims 1 and 2, **characterized in that** natural fibres are used as particulate natural materials.

4. Process according to any of Claims 1 to 3, **characterized in that** wood fibres, wood flour or woodchips are used as particulate natural materials.

5. Process according to any of Claims 1 to 4, **characterized in that** the polymer powder composition redispersible in water is used as a mixture with thermoplastics which are not redispersible in water.

6. Process according to any of Claims 1 to 5, **characterized in that** the polymer powder composition redispersible in water is used as a mixture with crosslinking agent.

## Revendications

1. Procédé pour la production de corps moulés à partir d'un mélange de matériaux naturels particulaires et de liant thermoplastique sans addition d'amidon, le mélange étant mis, avec élévation de la température et/ou de la pression, sous forme d'un corps moulé, **caractérisé en ce que** le liant thermoplastique est utilisé sous forme d'une composition de poudre de polymère redispersable dans l'eau, contenant
un ou plusieurs polymères à base d'un ou plusieurs monomères choisis dans le groupe comprenant des esters vinyliques, des (méth)acrylates avec des alcools ramifiés ou non ramifiés ayant de 1 à 15 atomes de carbone, des composés vinylaromatiques, des oléfines, des 1,3-diènes et des halogénures de vinyle et éventuellement 0,1 à 5 % en poids, par rapport au poids total du mélange de monomères, de monomères auxiliaires,
un ou plusieurs colloïdes protecteurs choisis dans le groupe comprenant des poly(alcool vinylique)s partiellement saponifiés ou totalement saponifiés, des polyvinylpyrrolidones, des polyvinylacétals, des celluloses et leurs dérivés, des protéines, des ligninesulfonates, le poly(méth)acrylamide, des acides polyvinylsulfoniques et leurs copolymères hydrosolubles, des mélamineformaldéhydesulfonates, des naphtalèneformaldéhydesulfonates,
ainsi que 1 à 30 % en poids d'agent anti-adhérence de contact, par rapport à la fraction polymère.

2. Procédé selon la revendication 1, **caractérisé en ce qu'**est contenu un polymère choisi dans le groupe comprenant un homopolymère d'acétate de vinyle, des copolymères d'acétate de vinyle et éthylène, des copolymères d'acétate de vinyle, éthylène et un ester vinylique d'acides monocarboxyliques α-ramifiés ayant de 9 à 11 atomes de carbone, des copolymères d'acrylate de n-butyle et acrylate de 2-éthylhexyle et/ou méthacrylate de méthyle, des copolymères de styrène et d'un ou plusieurs monomères choisis dans le groupe constitué par l'acrylate de méthyle, l'acrylate d'éthyle, l'acrylate de propyle, l'acrylate de n-butyle, l'acrylate de 2-éthylhexyle, des copolymères d'acétate de vinyle et d'un ou plusieurs monomères choisis dans le groupe constitué par l'acrylate de méthyle, l'acrylate d'éthyle, l'acrylate de propyle, l'acrylate de n-butyle, l'acrylate de 2-éthylhexyle et éventuellement l'éthylène, des copolymères de 1,3-butadiène et styrène et/ou méthacrylate de méthyle ainsi qu'éventuellement d'autres acrylates.

3. Procédé selon la revendication 1 ou 2, **caractérisé en ce qu'**on utilise comme matériaux naturels particulaires des fibres naturelles.

4. Procédé selon l'une quelconque des revendications 1 à 3, **caractérisé en ce qu'**on utilise comme matériaux naturels particulaires des fibres de bois, de la sciure de bois ou des copeaux de bois.

5. Procédé selon l'une quelconque des revendications 1 à 4, **caractérisé en ce que** la composition de poudre de polymère redispersable dans l'eau est utilisée en tant que mélange avec des matières thermoplastiques non redispersables dans l'eau.

6. Procédé selon l'une quelconque des revendications 1 à 5, **caractérisé en ce que** la composition de poudre de polymère redispersable dans l'eau est utilisée en tant que mélange avec des agents de réticulation.
